# EUROPÄISCHE PATENTSCHRIFT

(11) **EP 3 372 569 B1**
(45) Veröffentlichungstag und Bekanntmachung des Hinweises auf die Patenterteilung: **27.05.2020**
(21) Anmeldenummer: 18160187.3
(22) Anmeldetag: 06.03.2018
(51) Int. Cl.: C03C 8/02, C03C 8/14, C03C 17/04, C03C 10/00, F23M 11/04, F24B 1/192, F24C 15/04

(54) **EMAILLE-ZUSAMMENSETZUNG UND VERFAHREN ZUR HERSTELLUNG EMAILLIERTER GLASKERAMIKARTIKEL SOWIE DEREN VERWENDUNG**
ENAMEL COMPOSITION AND METHOD FOR PRODUCING ENAMELLED GLASS-CERAMIC ARTICLES AND THEIR USE
COMPOSITION D'ÉMAIL ET PROCÉDÉ DE FABRICATION D'ARTICLES EN VITROCÉRAMIQUE ÉMAILLÉS AINSI QUE LEUR UTILISATION

(30) Priorität: 10.03.2017 DE 102017204015
(43) Veröffentlichungstag der Anmeldung: 12.09.2018
(73) Patentinhaber: Schott AG, 55122 Mainz (DE)
(72) Erfinder: GABRIEL, Annelie, 55270 Klein-Winternheim (DE); KNOCHE, Silke, 55219 Saulheim (DE); KRANZ, Maximilian, 55129 Mainz (DE); MIX, Christian, 55122 Mainz (DE); SCHIWIETZ, Christine, 55218 Ingelheim (DE); MITRA, Ina, 55271 Stadecken-Elsheim (DE)

(56) Entgegenhaltungen:
- EP-A1- 0 771 765
- JP-A- 2002 255 584

## Beschreibung

Die vorliegende Erfindung betrifft eine hoch pigmentierte Emaille-Zusammensetzung, einen emaillierten Glaskeramikartikel, ein Verfahren zu dessen Herstellung sowie dessen Verwendung.

Glaskeramikartikel weisen häufig eine Emaille, beispielsweise zum Zwecke der Dekorierung oder zur Wiedergabe von Informationen, auf. Eine solche Emaille kann je nach Anwendung den Grundkörper des Artikels vollflächig oder teilflächig bedecken.

Glaskeramikartikel kommen allgemein aufgrund ihrer niedrigen thermischen Ausdehnung insbesondere bei solchen Anwendungen zum Einsatz, bei denen wiederholt starke Temperaturänderungen auftreten. Dies ist beispielsweise bei Kaminsichtscheiben der Fall. Bisher wurden Kaminsichtscheiben in einen Rahmen eingesetzt, der Teile der Sichtscheibe verdeckt. Aus ästhetischen und wirtschaftlichen Gründen ist es ein derzeitiger Trend, Kaminsichtscheiben durch Verkleben z.B. an der Tür des Kamins zu befestigen, so dass die Scheibe vollständig sichtbar ist. Dafür muss die Scheibe zumindest im Bereich der Verklebung mit einer blickdichten Emaille versehen werden, um den Klebebereich zu kaschieren. Hierfür muss die Emaille allerdings eine Vielzahl spezifischer Anforderungen erfüllen. Neben einer ausreichend hohen Opazität muss sie beständig gegenüber der Infiltration durch Flüssigkeiten sein, damit der Kleber vor dem Aushärten nicht in die Schicht eindringen und dadurch von der anderen Seite her sichtbare Klebestellen erzeugen kann. Sie muss stabil gegenüber den in einem Kamin auftretenden Temperaturen und Temperaturwechselbelastungen sein und eine hohe chemische Beständigkeit gegenüber Verbrennungsprodukten und Reinigungsmitteln besitzen.

Aus dem Stand der Technik sind diverse Emaille-Zusammensetzungen zum Emaillieren von Glaskeramiken bekannt, die eine Glasfritte und ein Pigment enthalten, jedoch nicht alle genannten Anforderungen erfüllen.

Die DE 198 34 801 A1 der Anmelderin beschreibt eine blei- und cadmiumfreie Emaille-Zusammensetzung. Die darin offenbarten Glasfritten weisen einen SiO₂-Anteil von bis zu 61,4 Gew.-% auf. Die Emaille-Zusammensetzungen enthalten 20 Gew.-% an weißen, grünen, braunen oder schwarzen Pigmenten. Diese Zusammensetzungen sind bezüglich der Biegefestigkeit der Glaskeramikartikel und der Abriebfestigkeit der Emaille optimiert.

Die Schrift DE 10 2005 004 068 A1 der Anmelderin beschreibt eine Emaille-Zusammensetzung, wobei das Pigment bis zu 40 Gew.-% der Mischung aus Glasfritte und Pigment ausmachen kann. Die darin aufgeführten Glasfritten beinhalten maximal 18 Gew.-% B₂O₃.

Die Schrift DE 10 2014 101 140 A1 der Anmelderin beschreibt eine Emaille-Zusammensetzung, wobei die Glasfritte von 0,5 bis <4 mol-% Bi₂O₃ enthält.

In der Schrift US 2012 263 957 A1 werden exemplarische Emaille-Zusammensetzungen offenbart, die einen Pigmentanteil von 50 Gew.-% aufweisen, wobei sowohl die Glasfritte als auch das Pigment eine Partikelgröße von 5 bis 6 µm aufweisen. Die dort aufgeführten Zusammensetzungen der Glasfritten beinhalten einen SiO₂-Gehalt von weniger als 56,5 Gew.-%. Es werden dort keine Angaben gemacht, inwiefern die Emaille blickdicht ist.

Die JP 2002 255584 A beschreibt eine Emaille-Zusammensetzung zur Herstellung einer rissfreien Emaille mit hoher chemischer Beständigkeit ohne Verwendung von Blei in der Glasfritte. Zu diesem Zweck wird eine zirkonhaltige Glasfritte vorgeschlagen, deren Anteil in der Emaille-Zusammensetzung mehr als 50 Gew.-% betragen soll.

Die EP 0 771 765 A1 offenbart eine Emaille-Zusammensetzung zur Herstellung einer Emaille mit heller Farbe und hoher Deckkraft auf einer dunkel eingefärbten Glaskeramik. Die Emaille-Zusammensetzung besteht im Wesentlichen aus 30 - 94 Gew.-% Glasfritte, 5 - 69 Gew.-% TiO₂ und 0,05 - 34 Gew.-% Farbpigment.

Die Schrift EP 2 806 215 A1 beschreibt Emaille-Zusammensetzungen, wobei das Pigment 30 bis 50 Gew.-% der Mischung aus Glasfritte und Pigment ausmachen kann. Die offenbarten Glasfritten enthalten 63 Gew.-% SiO₂ und 19 Gew.-% B₂O₃. Diese Schrift offenbart weiterhin, dass Pigmentanteile von mehr als 50 Gew.-% bei dieser Emaille-Zusammensetzung zu einer nachteilig hohen Porosität der Emaille führen.

Die Schrift JP 2014 214 046 A beschreibt eine Emaille-Zusammensetzung zur Emaillierung von Glaskeramiken mit einer mittleren Partikelgröße der Glasfritte von weniger als 1,0 µm. Die genaue Zusammensetzung der Glasfritte wird nicht offenbart. Die Emaille kann durch Einbrennen der Emaille-Zusammensetzung auf einem Grundkörper aus Glaskeramik bei Temperaturen von 700 bis <900°C hergestellt werden.

Es ist Aufgabe der vorliegenden Erfindung, eine Emaille-Zusammensetzung, einen emaillierten Glaskeramikartikel, dessen Verwendung und ein Verfahren zu dessen Herstellung bereitzustellen. Der erfindungsgemäße Glaskeramikartikel soll insbesondere blickdicht, thermisch und chemisch beständig sowie bevorzugt kostengünstig herzustellen sein.

Die Erfindung löst diese Aufgabe durch die unabhängigen Ansprüche. Vorteilhafte Ausgestaltungen und Weiterbildungen der Erfindung sind in den abhängigen Ansprüchen angegeben.

Ein erfindungsgemäßer Glaskeramikartikel weist einen Grundkörper aus Glaskeramik sowie eine blickdichte Emaille auf. Diese Emaille wird mittels einer Emaille-Zusammensetzung aufgebracht, die wenigstens eine Glasfritte und wenigstens ein Pigment enthält, wobei die Emaille-Zusammensetzung einen Pigmentanteil von >50 bis 60 Gew.-%, besonders bevorzugt 52 bis 57 Gew.-% aufweist. Die dafür verwendete Glasfritte weist eine Partikelgrößenverteilung mit einer mittleren Partikelgröße D50 von 0,5 µm bis 3 µm auf und enthält erfindungsgemäß mindestens die folgenden Bestandteile in Gew.-% auf Oxidbasis:

| | |
|---|---|
| SiO₂ | 65 - 72, |
| Al₂O₃ | 0,1 - 10, |
| B₂O₃ | 20 - 25, |
| Li₂O | 0 - <2, |
| Na₂O | 1 - 7, |
| K₂O | 0 - 3, |

Li₂O + Na₂O + K₂O 1 - 9 und
bis auf unvermeidliche Spuren frei von TiO2 und ZrO2 ist.

Ein derart emaillierter Glaskeramikartikel ist zwar aufgrund der Blickdichtheit besonders für Anwendungen geeignet, in denen er im emaillierten Bereich verklebt wird, er ist aber auch zur Verwendung in Anwendungen, in denen er nicht verklebt wird, geeignet. Ein solcher Glaskeramikartikel kann erfindungsgemäß als Sicht- oder Vorsatzscheibe von Kaminen und Öfen, Abdeckung von Lampen, Wärmestrahlern oder induktiven Batterieladevorrichtungen, als Teil der Rückseite eines Gehäuses für Mobiltelefone oder Tablets oder in Haushaltsgeräten wie beispielsweise Backöfen, Wasserkochern, vorzugsweise gasbefeuerten Grills oder Toastern verwendet werden. Unter einer Vorsatzscheibe von Kaminen und Öfen ist in diesem Zusammenhang eine an der von der Hitzequelle abgewandten Seite angeordnete Scheibe einer Mehrfachverglasung zu verstehen.

Ein erfindungsgemäßes Verfahren zum Herstellen eines emaillierten Glaskeramikartikels umfasst zumindest die folgenden Schritte:
• Bereitstellen eines Grundkörpers aus keramisierbarem Glas oder Glaskeramik,
• Bereitstellen einer Glasfritte mit einer Partikelgrößenverteilung mit einer mittleren Partikelgröße D₅₀ von 0,5 µm bis 3 µm, die mindestens folgende Bestandteile in Gew.-% auf Oxidbasis enthält:

| | |
|---|---|
| SiO₂ | 65 - 72, |
| Al₂O₃ | 0,1 - 10, |
| B₂O₃ | 20 - 25, |
| Li₂O | 0 - <2, |
| Na₂O | 1 - 7, |
| K₂O | 0 - 3, |

Li₂O + Na₂O + K₂O 1 - 9 und bis auf unvermeidliche Spuren frei von TiO₂ und ZrO₂ ist,
• Herstellen einer Emaille-Zusammensetzung durch Mischen der bereitgestellten Glasfritte mit einem Pigment, wobei die Emaille-Zusammensetzung einen Pigmentanteil von >50 bis 60 Gew.-%, bevorzugt 52 bis 57 Gew.-% aufweist,
• Aufbringen der Emaille-Zusammensetzung auf den bereitgestellten Grundkörper und
• Einbrennen der auf den Grundkörper aufgebrachten Emaille-Zusammensetzung bei einer Temperatur von 800°C bis 1100°C, bevorzugt 900 °C bis 1000 °C für 2 Minuten bis 120 Minuten, bevorzugt 10 Minuten bis 90 Minuten.

Unter einer Glasfritte ist gemäß der vorliegenden Erfindung ein Glaspulver zu verstehen, das eine Partikelgrößenverteilung und eine Glaszusammensetzung aufweist, durch die es dazu geeignet ist, in einer Emaille-Zusammensetzung verwendet zu werden.

Unter einer Emaille-Zusammensetzung ist gemäß der vorliegenden Erfindung eine Mischung aus wenigstens einer Glasfritte und wenigstens einem Pigment zu verstehen, die aufgrund der thermischen Eigenschaften ihrer Bestandteile dazu geeignet ist, zu einer Emaille weiterverarbeitet zu werden. Unter einem Pigment ist dabei allgemein ein pulverförmiges, anorganisches Farbmittel zu verstehen. Als solches besteht ein Pigment demnach aus Pigmentpartikeln, die eine vom Herstellungsprozess abhängige Partikelgrößenverteilung aufweisen. Durch Zugabe von Anpastmedien, Lösungsmitteln, Thixotropierungsmitteln, Additiven oder ähnlichen, meist organischen Zusatzstoffen zu Emaille-Zusammensetzungen können Pasten hergestellt werden, die mit gängigen Flüssigbeschichtungsverfahren auf die zu emaillierenden Artikel aufgebracht werden können.

Unter einer Emaille ist erfindungsgemäß eine auf einem Grundkörper aufgebrachte Beschichtung zu verstehen, die durch Einbrennen einer Emaille-Zusammensetzung auf der Oberfläche des Grundkörpers bei einer Temperatur oberhalb der Erweichungstemperatur der Glasfritte hergestellt wurde. Bei diesem Einbrennprozess schmilzt die Glasfritte auf, benetzt die Oberfläche des Grundkörpers und härtet beim anschließenden Abkühlen in Form einer zusammenhängenden Schicht wieder aus. Die einer Emaille-Zusammensetzung zugegebenen organischen Zusatzstoffe verflüchtigen sich aufgrund der hohen Temperaturen während des Einbrennens.

Die Erweichungstemperatur der Glasfritte, definiert als die Temperatur, bei der die Glaszusammensetzung der Fritte eine Viskosität von η = 10^{7,6} dPa*s aufweist, wird auch als dilatometrischer Erweichungspunkt bezeichnet. Die Erweichungstemperatur ist eine Materialeigenschaft und kein Prozessparameter.

Unter einer blickdichten Emaille ist eine Emaille mit einer Opazität von mindestens 1,5 zu verstehen, die zusätzlich den unten aufgeführten Test zur Klebersichtbarkeit besteht.

Unter einem emaillierten Artikel ist entsprechendes Erzeugnis zu verstehen, das einen Grundkörper aufweist, auf dessen Oberfläche eine Emaille eingebrannt ist. Abhängig von der Verwendung des emaillierten Artikels kann dabei die Emaille die Oberfläche des Grundkörpers vollständig oder nur teilweise bedecken.

Eine Glasfritte einer erfindungsgemäßen Emaille-Zusammensetzung zum Emaillieren von Glaskeramikartikeln, enthält mindestens folgende Bestandteile in Gew.-% auf Oxidbasis:

| | |
|---|---|
| SiO₂ | 65 - 72, |
| Al₂O₃ | 0,1 - 10, |
| B₂O₃ | 20 - 25, |
| Li₂O | 0 - <2, |
| Na₂O | 1 - 7, |
| K₂O | 0 - 3, |

Li₂O + Na₂O + K₂O 1 - 9 und
ist bis auf unvermeidliche Spuren frei von TiO₂ und ZrO₂.

Dieser gezielt gewählte Zusammensetzungsbereich zeichnet sich insbesondere durch einen hohen SiO₂-Gehalt und einen hohen B₂O₃-Gehalt in Kombination mit niedrigen Gehalten an Alkalioxiden aus. Hierbei handelt es sich um eine gezielte Wahl in relativ engen Grenzen der viskositätserhöhenden Komponenten SiO₂ und Al₂O₃ in Kombination mit den viskositätsabsenkenden B₂O₃ und Alkalioxiden. Hierdurch wird der Viskositätsverlauf gesteuert, insbesondere verlängert, d.h. der Temperaturunterschied zwischen Transformations- bzw. Erweichungstemperatur und der Verarbeitungstemperatur wird vergrößert und der Aufschmelzbereich der Glasfritte in Kombination mit der Pigmentierung von >50% bis 60% an die Einbrandbedingungen angepasst.

In einer Weiterbildung der Erfindung enthält die Glasfritte bevorzugt mindestens folgende Bestandteile in Gew.-% auf Oxidbasis:

| | |
|---|---|
| SiO₂ | 67 - 70, |
| Al₂O₃ | 1 - 8, |
| B₂O₃ | 20,5 - 23, |
| Li₂O | 0 - <2, |
| Na₂O | 1 - 7, |
| K₂O | 0 - 3, |

Li₂O + Na₂O + K₂O 1 - 9 und
ist bis auf unvermeidliche Spuren frei von TiO₂ und ZrO₂.

Es hat sich in überraschender Weise gezeigt, dass in diesem schmalen Zusammensetzungsbereich, der thermische Ausdehnungskoeffizient der Glasfritte in vorteilhafter Weise besonders niedrig und die Opazität einer mittels einer solchen Glasfritte hergestellten erfindungsgemäßen Emaille besonders hoch ist.

In einer Weiterbildung der Erfindung enthält die Glasfritte vorzugsweise Erdalkalioxide mit MgO + CaO + SrO + BaO von >0 bis 5 Gew.-%, besonders bevorzugt >0 bis 3 Gew.-%, weiterhin bevorzugt ist sie dabei bis auf unvermeidliche Spuren frei von SrO. Dieser geringe Gehalt an Erdalkalioxiden erhöht zusätzlich die benötigte Länge des Glases, d.h. die Temperaturdifferenz zwischen der Transformations- bzw. Erweichungstemperatur und der Verarbeitungstemperatur, was zur weiteren Verbesserung des Aufschmelzverhaltens der erfindungsgemäßen Emaille-Zusammensetzungen führt.

Aufgrund der ungünstigen toxikologischen Eigenschaften von Blei und Cadmium ist die Glasfritte bevorzugt bis auf unvermeidliche Spuren frei von PbO und CdO.

Da Bismutoxid in der Glaszusammensetzung zu einer Absenkung der Erweichungstemperatur und in der Glasschmelze zu Legierungseffekten führen kann und es darüber hinaus in Beschaffung und Verarbeitung wirtschaftlich nachteilig ist, ist die Glasfritte bevorzugt bis auf unvermeidliche Spuren frei von Bi₂O₃.

TiO₂ und ZrO₂ wirken in Glaszusammensetzungen als Kristallisationskeime. Da eine Kristallisation der Emaille während des Einbrennens unter anderem zu einer unerwünschten Porosität führen kann, ist die Glasfritte bis auf unvermeidliche Spuren frei von TiO₂ und ZrO₂

P₂O₅ kann im Allgemeinen in Glaszusammensetzungen als Glasbildner eingesetzt werden. P₂O₅ kann auch zu einer Erhöhung der Entglasungsneigung und zu unerwünschten Reaktionen mit dem Tiegelmaterial der Wanne während der Schmelze und somit zu höheren Kosten führen. Daher ist die Glasfritte bevorzugt bis auf unvermeidliche Spuren frei von P₂O₅.

Es ist besonders vorteilhaft, wenn die thermische Ausdehnung der Emaille so nah wie möglich an die des Grundkörpers angepasst ist. Sowohl während des Abkühlprozesses am Abschluss des Einbrennvorgangs als auch bei starken Temperaturwechselbelastungen des Glaskeramikartikels in der Anwendung kommt es aufgrund der unterschiedlichen thermischen Ausdehnungen zu Spannungen zwischen der Emaille und der Oberfläche des Grundkörpers. Bei Überschreiten einer kritischen Spannung entlädt sich diese durch Bildung von Rissen in der Emaille, die bis in den Grundkörper hineinreichen können. Es bildet sich ein Rissnetzwerk im emaillierten Bereich. Die in den Grundkörper hineinreichenden Risse bewirken eine deutliche Erniedrigung der Stoßfestigkeit des emaillierten Artikels.

In einer Weiterbildung der Erfindung weist deshalb die Glasfritte einen thermischen Ausdehnungskoeffizienten CTE von 2,0^{∗}10⁻⁶/K bis 4,5^{∗}10⁻⁶ /K im Temperaturbereich von 20 °C bis 300 °C auf. Dies lässt sich insbesondere durch einen geringen Alkaligehalt in der Glasfritte erzielen.

Der thermische Ausdehnungskoeffizient CTE wird im Sinne der Erfindung gemittelt über einen Temperaturbereich zwischen 20 °C und 300 °C bestimmt. Die Bestimmung kann entsprechend der DIN ISO 7991 erfolgen. Der CTE der Glasfritte wird vor dem Aufmahlen des Glases bestimmt. Die Probengeometrie entspricht in der Regel einem Stab mit einer Länge von 50 mm und einer Dicke von 4 mm.

In einer Weiterbildung der Erfindung haben die Erfinder überraschend festgestellt, dass es sich besonders für Emaille-Zusammensetzungen mit hohem Pigmentanteil vorteilhaft auf die Eigenschaften der Emaille auswirkt, die Abhängigkeit der Viskosität der Glasfritte von der Temperatur gezielt auf einen definierten Verlauf einzustellen. Dabei hat es sich gezeigt, dass eine Wahl der Transformationstemperatur T_{g} im Bereich von 400 °C bis 550 °C, bevorzugt bis 500 °C, der Erweichungstemperatur E_{w} im Bereich von 650°C bis 850 °C, bevorzugt 700 °C bis 800°C und der Verarbeitungstemperatur V_{A} im Bereich von 900 bis 1200 °C, bevorzugt 950 - 1150 °C eine sehr gute Optimierbarkeit des Aufschmelzverhaltens der Glasfritte erlaubt. Durch diese gezielte Wahl, ändert sich die Viskosität des Glases mit steigender oder sinkender Temperatur nur relativ langsam, was auch bei hohem Pigmentanteil zu einer niedrigen Porosität in der Emaille führt. Dies ist insbesondere bei einer Differenz zwischen Verarbeitungs- und Transformationstemperatur V_{A}-T_{g} von mindestens 500 K der Fall.

So weist die Glasfritte bevorzugt eine Transformationstemperatur T_{g} von 400 °C bis 550 °C, besonders bevorzugt bis 500 °C, eine Erweichungstemperatur Ew von 650 °C bis 850 °C, besonders bevorzugt von 700 °C bis 800 °C sowie eine Verarbeitungstemperatur V_{A} von 900 °C bis 1200 °C, besonders bevorzugt von 950 °C bis 1150 °C auf. Die Differenz zwischen Verarbeitungs- und Transformationstemperatur beträgt vorzugsweise mindestens 500 K.

Die Transformationstemperatur T_{g} wird bestimmt durch den Schnittpunkt der Tangenten an die beiden Äste der Ausdehnungskurve bei der Messung mit einer Heizrate von 5 K/min. Dies entspricht einer Messung nach ISO 7884-8 bzw. DIN 52324.

Die Verarbeitungstemperatur V_{A}, unter der die Temperatur verstanden wird, bei der das Glas eine Viskosität von 10⁴ dPa*s aufweist, wird nach DIN ISO 7884-2 bestimmt. Die Verarbeitungstemperatur ist eine Materialeigenschaft und kein Prozessparameter.

Die Erweichungstemperatur wird nach DIN ISO 7884-3 bestimmt.

Die Glasfritte weist eine Partikelgrößenverteilung mit einer mittleren Partikelgröße D₅₀ von 0,5 µm bis 3 µm und bevorzugt 1 bis 2 µm auf. Dies bedeutet, dass bezogen auf das Gesamtvolumen aller Partikel 50 % der Partikel kleiner als der Wert D₅₀ und 50 % der Partikel größer als der Wert D₅₀ sind. Die Partikelgröße wird mittels Laserbeugungsmethode mit dem Lasergranulometer CILAS 1064 der Firma CILAS Instrumentation bestimmt. Während zu kleine Partikelgrößen nachteilig für beispielsweise Handhabung und Lagerung der Glasfritten sind, hat es sich gezeigt, dass sich mittlere Partikelgrößen von mehr als 5 µm nachteilig auf das Aufschmelzverhalten der Fritte auswirken, da sie zu einer unerwünschten Erhöhung der Aufschmelztemperatur führen.

Eine erfindungsgemäße Emaille-Zusammensetzung enthält wenigstens eine Glasfritte und wenigstens ein Pigment, wobei die Emaille-Zusammensetzung einen Pigmentanteil von >50 bis 60 Gew.-%, bevorzugt 52 bis 57 Gew.-% aufweist.

Eine derart hohe Pigmentierung der Emaille-Zusammensetzung wird erst durch die Verwendung einer wie oben beschriebenen Glasfritte ermöglicht, da die Verwendung anderer Glasfritten, deren Aufschmelzverhalten nicht für einen hohen Pigmentanteil optimiert ist, bei Pigmentanteilen von 50 Gew.-% oder mehr zu einer unerwünschten Porosität der Emaille führen. Gleichzeitig bewirkt der hohe Pigmentanteil in der erfindungsgemäßen Emaille-Zusammensetzung eine besonders hohe Opazität der damit hergestellten Emaille.

Ab einem Pigmentanteil von mehr als 60 Gew.-% erfüllt eine damit hergestellte Emaille selbst bei Verwendung einer solchen Glasfritte nicht mehr die für die Verwendungen erforderlichen technischen Anforderungen, insbesondere bezüglich der Resistenz gegen Infiltration durch Reinigungsmittel und Klebstoffe.

Die erfindungsgemäße Emaille-Zusammensetzung ist also aufgrund der gezielten Wahl der Glasfritte und des Pigmentanteils besonders für die Herstellung einer blickdichten Emaille mit hoher Opazität und niedriger Porosität geeignet, die sich weiterhin durch eine hohe Resistenz gegen Infiltration durch Reinigungsmittel und Klebstoffe, sowie eine ausreichende Stoßfestigkeit der emaillierten Artikel auszeichnet.

Darüber hinaus kann eine erfindungsgemäße Emaille-Zusammensetzung auch eine Mischung aus zumindest zwei verschiedenen Glasfritten enthalten. Dabei ist es besonders vorteilhaft, wenn die Zusammensetzungen aller in der Mischung enthaltenen Glasfritten in den erfindungsgemäßen Bereich fallen.

Zur Einstellung eines gewünschten Farborts oder zur Erzielung eines bestimmten Effekts, können der Emaille-Zusammensetzung in einer Weiterbildung der Erfindung auch zusätzliche Pigmente hinzugefügt werden. Der Anteil der Glasfritte an einer Emaille-Zusammensetzung mit mehreren verschiedenen Pigmenten beträgt dabei von 40 Gew.-% bis 50 Gew.-%, bevorzugt von 43 Gew.-% bis 48 Gew.-%.

Es hat sich gezeigt, dass es zur Erzielung einer niedrigen Porosität der Emaille besonders vorteilhaft ist, wenn das wenigstens eine enthaltene Pigment eine Partikelgrößenverteilung mit D₅₀ von 0,1 µm bis 2 µm, bevorzugt >0,8 µm bis 1,5 µm aufweist und besonders bevorzugt, wenn die Pigmentpartikel einen kleineren Wert für D₅₀ aufweisen als die Partikel der Glasfritte.

Als Pigmente können insbesondere farbgebende Pigmente in Form von Metalloxiden, bevorzugt als Spinelle, hinzugesetzt werden, insbesondere Cobalt-Oxide/-Spinelle, Cobalt-Aluminium-Spinelle, Cobalt-Aluminium-Zink-Oxide, Cobalt-Aluminium-Silizium-Oxide, Cobalt-Titan-Spinelle, Cobalt-Chrom-Spinelle, Cobalt-Aluminium-Chrom-Oxide, Cobalt-Nickel-Eisen-Chrom-Oxide/-Spinelle, Cobalt-Nickel-Mangan-Eisen-Chrom-Oxide/-Spinelle, Cobalt-Nickel-Zink-Titan-Aluminium-Oxide/-Spinelle, Chrom-Eisen-Nickel-Mangan-Oxide/-Spinelle, Cobalt-Eisen-Chrom-Oxide/-Spinelle, Cobalt-Eisen-Chrom-Mangan-Oxide/- Spinelle, Nickel-Eisen-Chrom-Oxide/-Spinelle, Eisen-Mangan-Oxide/-Spinelle, Eisen-Oxide, Eisen-Chrom-Oxide, Eisen-Chrom-Zinn-Titan-Oxide, Kupfer-Chrom-Spinelle, Nickel-Chrom-Antimon-Titan-Oxide, Titan-Oxide, Zirkon-Silizium-Eisen-Oxide/-Spinelle. Bevorzugt werden als Pigmente Absorptionspigmente, insbesondere auch plättchen- oder stäbchenförmige Pigmente, beschichtete Effektpigmente verwendet, die als Einzelpigmente oder auch als Pigmentmischung der Glasfritte zugesetzt werden können. Besonders bevorzugt sind Schwarzpigmente auf Basis von Co-Cr-Fe-Mn-Spinellen.

Ein erfindungsgemäßer Glaskeramikartikel weist einen Grundkörper aus Glaskeramik sowie eine Emaille auf, wobei die Emaille mittels einer erfindungsgemäßen Emaille-Zusammensetzung aufgebracht wurde.

Bei dem Grundkörper kann es sich um eine transparente Glaskeramik handeln, die farblos oder eingefärbt sein kann, mit einem CTE von -1^{∗}10⁻⁶/K bis 4,5^{∗}10⁻⁶/K in einem Temperaturbereich von 20 °C bis 300 °C.

In einer bevorzugten Weiterbildung der Erfindung besteht der Grundkörper aus einer LAS-Glaskeramik. Unter einer LAS-Glaskeramik versteht man eine Lithium-Alumino-Silikat-Glaskeramik, teilweise auch Lithium-Aluminium-Silikat-Glaskeramik genannt, die bei geeigneter Zusammensetzung und Keramisierung in einem bestimmten Temperaturbereich eine stark reduzierte thermische Ausdehnung hat, die nahe null sein kann. Beispielsweise wird von der Anmelderin unter der Marke ROBAX® eine farblose LAS-Glaskeramik zur Anwendung bei Kaminsichtscheiben hergestellt und vermarktet.

In einer weiteren Weiterbildung der Erfindung ist der Glaskeramikartikel als Scheibe ausgeführt und weist eine Dicke von 0,1 bis 40 mm, bevorzugt 1 bis 10 mm, besonders bevorzugt 3 bis 8 mm auf.

Der Glaskeramikartikel kann dabei nicht nur eben ausgeformt sein, sondern auch zumindest abschnittsweise dreidimensional verformt sein. Beispielsweise abgekantete, gewinkelte oder gewölbte Platten oder Scheiben können verwendet werden. Die Platten oder Scheiben können rechtwinklig oder in anderen Formen vorliegen sowie neben ebenen Bereichen dreidimensional verformte Bereiche wie z. B. Woks oder eingewalzte Stege oder Flächen, Linien oder Punkte als Erhebungen bzw. Vertiefungen enthalten. Die geometrischen Verformungen der Platten oder Scheiben werden bei der Heißformgebung, wie beispielsweise durch strukturierte Formgebungswalzen oder durch nachgelagerte Formgebungsverfahren an den Ausgangsgläsern z. B. durch Brenner, Laseraufwölbung oder durch Schwerkraftsenken vorgenommen. Bei der Keramisierung wird mit unterstützenden keramischen Formen gearbeitet, um unkontrollierte Änderungen der geometrischen Form zu vermeiden.

Die Dicke der Emaille beträgt von 1 bis 10 µm, besonders bevorzugt von 2 bis 7 µm. Die Emaille kann vollflächig oder auch lokal, als strukturiertes Dekor wie Raster, Muster, Schriftzeichen, Symbole etc. vorliegen. Sie kann als eine einzelne Schicht oder auch mehrere Dekore nebeneinander angeordnet und/oder auch übereinander ausgeführt sein. Die Emaille kann weiterhin ein- oder beidseitig auf das Substrat aufgebracht sein.

Die blickdichte Emaille weist eine Opazität von mindestens 1,5, bevorzugt mindestens 2 auf. In einer Weiterbildung der Erfindung weist die Emaille einen L-Wert (Helligkeitswert) von weniger als 30, bevorzugt weniger als 28 sowie einen a*-Wert und einen b*-Wert mit einem Betrag von jeweils weniger als 2, bevorzugt weniger als 1 im CIE-L*a*b*-Farbraum auf.

Die Porosität einer Emaille beeinflusst die Rauheit ihrer Oberfläche und somit auch deren Glanz. Je höher der Glanzwert ist, desto besser, glatter, ist die Glasfritte bei der Herstellung der Emaille aufgeschmolzen. Aus dem Stand der Technik ist bekannt, dass Emaillen mit einem hohen Pigmentgehalt sehr porös und somit an der Oberfläche sowohl rau als auch nicht glänzend, sondern matt sind. Die unter Verwendung einer erfindungsgemäßen Emaille-Zusammensetzung hergestellte Emaille hat trotz einer Pigmentierung von mindestens 50 Gew.-% eine geringe Porosität. Das spiegelt sich in einem hohen Glanzwert wider.

Der Glanzwert eines erfindungsgemäßen Glaskeramikartikels weist ≥ 1, bevorzugt ≥ 2 und besonders bevorzugt ≥ 5 bei Messung unter einem Winkel von 60° im Bereich der Emaille auf der emaillierten Seite des Glaskeramikartikels auf.

Weiterhin kann der erfindungsgemäße Glaskeramikartikel zusätzlich zu der Emaille weitere, insbesondere funktionelle Beschichtungen wie beispielsweise antireflektierende, IR-reflektierende, verspiegelnde, oder thermokatalytische Schichten sowie Hartstoffschichten mit Anti-Kratz- oder Easy-to-clean-Eigenschaften. Wenn weitere Beschichtungen oder Dekore vorhanden sind, können diese beispielsweise auf keramischer, Sol-Gel-, Silikon-, Polymer-Basis und/oder Metalloxid- oder Metallschichten sein, sowohl einzeln als auch in Kombination vorhanden sein. Sowohl die Emaille als auch zusätzliche Beschichtungen oder Dekore können auf derselben Seite des Glaskeramikartikels nebeneinander und/oder übereinander angeordnet sein und/oder auf gegenüberliegenden Seiten, z.B. auf der Innen- und/oder Außenseite eines Kaminsichtfensters. Insbesondere können die zusätzlichen Beschichtungen sowohl zwischen dem Grundkörper und der Emaille oder auf der Emaille angeordnet sein.

Ein erfindungsgemäßer Glaskeramikartikel, der mittels einer erfindungsgemäßen Emaille-Zusammensetzung hergestellt wurde erfüllt alle Anforderungen für eine Verwendung als Sicht- oder Vorsatzscheibe von Kaminen und Öfen, Abdeckung von Lampen, Wärmestrahlern oder induktiven Batterieladevorrichtungen, als Teil der Rückseite eines Gehäuses für Mobiltelefone oder Tablets oder in Haushaltsgeräten wie beispielsweise Backöfen, Wasserkochern, vorzugsweise gasbefeuerten Grills oder Toastern.

Ein erfindungsgemäßes Verfahren zum Herstellen eines emaillierten Glaskeramikartikels, umfasst zumindest die folgenden Schritte:
• Bereitstellen eines Grundkörpers aus keramisierbarem Glas oder Glaskeramik
• Bereitstellen einer Glasfritte mit einer Partikelgrößenverteilung mit einer mittleren Partikelgröße D₅₀ von 0,5 µm bis 3 µm, die mindestens folgende Bestandteile in Gew.-% auf Oxidbasis enthält:

| | |
|---|---|
| SiO₂ | 65 - 72, |
| Al₂O₃ | 0,1 - 10, |
| B₂O₃ | 20 - 25, |
| Li₂O | 0 - <2, |
| Na₂O | 1 - 7, |
| K₂O | 0 - 3, |

Li₂O + Na₂O + K₂O 1 - 9 und ist bis auf unvermeidliche Spuren frei von TiO₂ und ZrO₂,
• Herstellen einer Emaille-Zusammensetzung durch Mischen der bereitgestellten Glasfritte mit einem Pigment, wobei die Emaille-Zusammensetzung einen Pigmentanteil >50 bis 60 Gew.-%, besonders bevorzugt 52 bis 57 Gew.-% aufweist,
• Aufbringen der Emaille-Zusammensetzung auf den bereitgestellten Grundkörper und
• Einbrennen der auf den Grundkörper aufgebrachten Emaille-Zusammensetzung bei einer Temperatur von 800°C bis 1100°C, bevorzugt 900 °C bis 1000 °C für 2 Minuten bis 120 Minuten, bevorzugt 10 Minuten bis 90 Minuten.

Das Aufbringen der Emaille-Zusammensetzung auf den bereitgestellten Grundkörper kann beispielsweise mittels Pulverbeschichten erfolgen. In einer Weiterbildung der Erfindung kann die Emaille-Zusammensetzung durch Hinzufügen von üblichen Anpast- und/oder Lösemitteln sowie Additiven zu einer Paste verarbeitet werden, die insbesondere im Sieb-, Tintenstrahl-, Tampon- oder Offset-Druck, per Sprüh-, Tauch- oder Rollenbeschichtung sowie mit Abziehbildverfahren, Rakeln, Fluten oder Spin-Coating aufgebracht werden kann.

Die Emaille-Zusammensetzung wird nach dem Aufbringen auf den Grundkörper eingebrannt, bei einer Temperatur von 800 °C bis 1100 °C, bevorzugt 900 °C bis 1000 °C für eine Dauer von 2 bis 120 Minuten, bevorzugt 10 bis 90 Minuten. Danach wird die Emaille kontrolliert auf Raumtemperatur abgekühlt. Diese Kombination aus Einbrandtemperatur und -dauer ermöglicht bei der Verwendung erfindungsgemäßer Emaille-Zusammensetzungen die Herstellung einer besonders blickdichten Emaille.

Hierfür ist es in einer Weiterbildung der Erfindung vor allem für die Energie- und Kosteneffizienz des Verfahrens besonders vorteilhaft, wenn das Einbrennen mit einem weiteren thermischen Prozessschritt kombiniert wird. Wenn es sich bei dem Grundkörper um keramisierbares Glas handelt, kann das Einbrennen bevorzugt während der Keramisierung zu einer Glaskeramik erfolgen. Da die Keramisierung eines keramisierbaren Glases allerdings ein sehr spezifisches Temperatur-Zeit-Profil erfordert, müssen die thermischen Eigenschaften der Glasfritte speziell auf diesen Prozess abgestimmt werden. Da die Glasfritte so gewählt ist, dass sie bei den typischerweise während einer Keramisierung auftretenden Temperaturen eine Viskosität nahe der Verarbeitungstemperatur aufweisen, ist sie hierfür besonders gut geeignet.

Das erfindungsgemäße Verfahren umfasst aber ebenso das Aufbringen der Emaille-Zusammensetzung auf eine bereits keramisierte LAS-Glaskeramik mit einem anschließenden Einbrandschritt.

In einer Weiterbildung der Erfindung kann das erfindungsgemäße Verfahren um zusätzliche Verfahrensschritte erweitert werden. Hierzu zählen beispielsweise mechanische Bearbeitungsschritte wie abrasive Prozesse oder Polierprozesse aber auch Umformprozesse wie Biegen, Wölben oder Senken, chemische Bearbeitungsschritte wie Ätzen oder eine laserbasierte Nachbearbeitung, insbesondere mittels Hochleistungslaserdioden oder Ultrakurzpulslasern. Die Grundkörper können beispielsweise Bohrungen, lokale Erhöhungen oder Vertiefungen aufweisen.

Im Folgenden wird die Erfindung anhand von Ausführungsbeispielen näher erläutert.

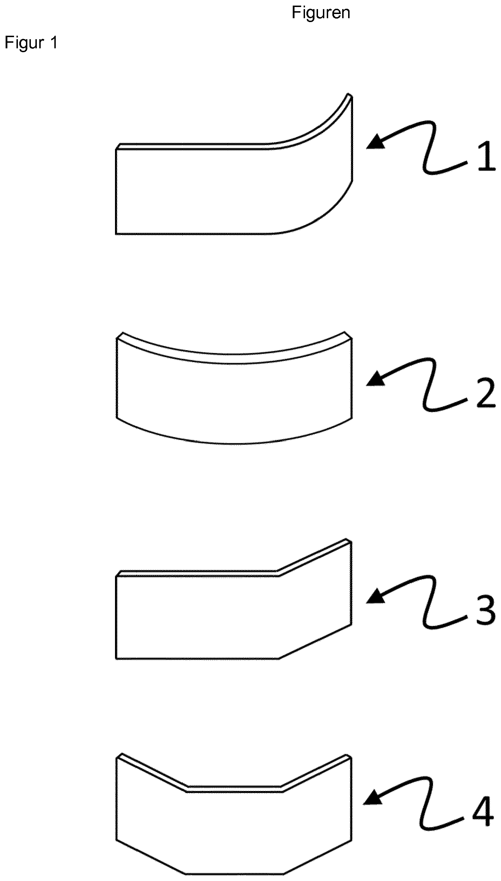

Figur 1 zeigt in einer schematischen Darstellung verschiedene Ausführungen von nicht ebenen emaillierten Glaskeramikartikeln. Dabei ist Glaskeramikartikel (1) abschnittsweise rundverformt. Glaskeramikartikel (2) ist rundverformt. Glaskeramikartikel (3) ist einfach winklig gebogen. Glaskeramikartikel (4) ist zweifach winklig gebogen. Die Emaille ist in Figur 1 nicht explizit dargestellt.

Tabelle 1 enthält die Zusammensetzungen der Glasfritten, ausgewählte Eigenschaften der Glasfritten, den Pigmentanteil der Emaille-Zusammensetzungen sowie Eigenschaften der mittels der Emaille-Zusammensetzungen hergestellten Emaillen der erfindungsgemäßen Beispiele 1 bis 6.

Die Beispiele 1 bis 4 und 6 unterscheiden sich in der Zusammensetzung der Glasfritten, die jeweils zu einer Emaille-Zusammensetzung mit einem Pigmentanteil von 55 Gew.-% weiterverarbeitet wurden. Beispiel 5 zeigt eine Emaille-Zusammensetzung mit der gleichen Glasfritte wie in Beispiel 4 aber mit einem Pigmentanteil von 57 Gew.-%.

**Tabelle 1: Erfindungsgemäße Beispiele**

| Beispiel | 1 | 2 | 3 | 4 | 5 | 6 |
|---|---|---|---|---|---|---|
| Na₂O | 6 | 4,7 | 4,8 | 1,3 | 1,3 | 1,3 |
| K₂O | 0,1 | 0 | 0 | 1,8 | 1,8 | 1,8 |
| Li₂O | 0 | 0 | 0 | 0,8 | 0,8 | 0,8 |
| Na₂O + K₂O + Li₂O | 6,1 | 4,7 | 4,8 | 3,9 | 3,9 | 3,9 |
| MgO | 0,3 | 0 | 0,6 | 0 | 0 | 0 |
| CaO | 1,3 | 0,8 | 0 | 0,6 | 0,6 | 0,6 |
| BaO | 0 | 0 | 0 | 1,3 | 1,3 | 1,3 |
| SrO | 0 | 0 | 0 | 0 | 0 | 0 |
| MgO + CaO + SrO + BaO | 1,6 | 0,8 | 0,6 | 1,9 | 1,9 | 1,9 |
| ZnO | 0,4 | 0 | 1 | 0 | 0 | 0 |
| ZrO₂ | 0 | 0 | 0 | 0 | 0 | 0 |
| Al₂O₃ | 0,6 | 0,8 | 1,6 | 5,0 | 5,0 | 5,0 |
| B₂O₃ | 24,3 | 21,7 | 20,8 | 21,7 | 21,7 | 21,7 |
| SiO₂ | 65,8 | 70 | 70 | 65,6 | 65,6 | 65,6 |
| F | 1,2 | 2 | 1,2 | 1,9 | 1,9 | 0 |
| CTE Glasfritte (10⁻⁶ /K) | 4,26 | 3,68 | 3,33 | 4,1 | 4,1 | 4,1 |
| T_{g}(°C) | 477 | 446 | 465 | 430 | 430 | 478 |
| V_{A}(°C) | 987 | 1057 | 1128 | 1090 | 1090 | 1130 |
| V_{A}-T_{g} (°C) | 510 | 611 | 663 | 660 | 660 | 652 |
| E_{w}(°C) | 775 | 769 | 752 | 715 | 715 | 765 |
| Pigmentanteil (Gew.-%) | 55 | 55 | 55 | 55 | 57 | 55 |
| Opazität | 2,0 | 3,1 | 4,0 | 2,3 | 2,9 | 2,2 |
| Klebersichtbarkeit | ○ | ○ | ○ | ○ | ○ | ○ |
| Schichtdicke (µm) | 4,0 | 3,9 | 4,3 | 3,7 | 4,0 | 3,8 |
| Sichtbark. Reinigungsm. | ○ | ○ | ○ | ○ | ○ | ○ |
| L* | 26,1 | 26,2 | 26,1 | 26,0 | 26,1 | 26,8 |
| a* | 0,4 | 0,2 | 0,1 | 0,4 | 0,3 | 0,4 |
| b* | 0,2 | 0,3 | 0,1 | 0,0 | 0,2 | 0,3 |
| Glanz bei 60° | 2,2 | 3,3 | 3,0 | 6,3 | 2,9 | 2,1 |

Tabelle 2 enthält die Zusammensetzungen der Glasfritten, ausgewählte Eigenschaften der Glasfritten, den Pigmentanteil der Emaille-Zusammensetzungen sowie Eigenschaften der mittels der Emaille-Zusammensetzungen hergestellten Emaillen der nicht erfindungsgemäßen Vergleichsbeispiele V1 bis V5. Die Vergleichsbeispiele V1 bis V4 weichen in der Zusammensetzung der Glasfritte und im Falle von Vergleichsbeispiel 1 und 2 zusätzlich auch im Pigmentanteil von den erfindungsgemäßen Zusammensetzungen ab. Die Zusammensetzung der Glasfritte von Vergleichsbeispiel V5 entspricht der des erfindungsgemäßen Beispiels 3 bei einem Pigmentanteil der Emaille-Zusammensetzung von nur 45 Gew.-%.

**Tabelle 2: Vergleichsbeispiele.**

| Vergleichsbeispiel | V1 | V2 | V3 | V4 | V5 |
|---|---|---|---|---|---|
| Na₂O | 0 | 3,3 | 3,3 | 0 | 4,8 |
| K₂O | 0 | 0,5 | 0,5 | 0 | 0 |
| Li₂O | 5,0 | 1,1 | 1,1 | 3,1 | 0 |
| Na₂O+K₂O+Li₂O | 5,0 | 4,9 | 4,9 | 3,1 | 4,8 |
| MgO | 0 | 4 | 4 | 1,7 | 0,6 |
| CaO | 1,2 | 0 | 0 | 2,0 | 0 |
| BaO | 0 | 0 | 0 | 0 | 0 |
| SrO | 1,0 | 0 | 0 | 2,3 | 0 |
| MgO+CaO+SrO+BaO | 2,2 | 4 | 4 | 6,0 | 0,6 |
| ZnO | 3,4 | 2,5 | 2,5 | 2,2 | 1 |
| ZrO₂ | 1,3 | 0 | 0 | 1,1 | 0 |
| Al₂O₃ | 6,0 | 4,6 | 4,6 | 16,6 | 1,6 |
| B₂O₃ | 22,0 | 26 | 26 | 16,7 | 20,8 |
| SiO₂ | 59,3 | 56 | 56 | 54,3 | 70 |
| F | 0,8 | 2 | 2 | 0 | 1,2 |
| CTE Glasfritte (10⁻⁶ /K) | 4,76 | 4,7 | 4,7 | 4,4 | 3,33 |
| T_{g}(°C) | 476 | 480 | 480 | 578 | 465 |
| V_{A}(°C) | 902 | 950 | 950 | 1064 | 1128 |
| V_{A}-T_{g} (°C) | 426 | 470 | 470 | 486 | 663 |
| E_{w}(°C) | 660 | 714 | 714 | 765 | 752 |
| Pigmentanteil (Gew.-%) | 55 | 45 | 55 | 55 | 45 |
| Opazität | 0,8 | 0,8 | 3,45 | 2,2 | 1,1 |
| Klebersichtbarkeit | x | x | x | x | o |
| Schichtdicke (µm) | 4,4 | 3,8 | 4,7 | 3,4 | 3,8 |
| Sichtbark. Reinigungsmittel | x | ○ | x | x | ○ |
| L* | 26,3 | 26,3 | 30,0 | 26,1 | 26,3 |
| a* | 0,1 | 0,4 | 0,3 | 0,5 | 0,2 |
| b* | -0,4 | 0,3 | 0,7 | 0,2 | 0,3 |
| Glanz bei 60° | 0,5 | 0,8 | 0,3 | 0,4 | 15,6 |

Für alle Beispiele und Vergleichsbeispiele wurde eine Emaille-Zusammensetzung durch Mischen der entsprechenden Glasfritte mit der jeweiligen Zusammensetzung und einer Partikelgrößenverteilung von D₅₀ = 1,5 µm mit einem Co-Cr-Fe-Mn-Spinell (Schwarzpigment) mit einem D₅₀-Wert von 1,2 µm hergestellt. Der Pigmentanteil betrug jeweils 55 Gew.-%, außer für Beispiel 5 (57 Gew.-%) und die Vergleichsbeispiele V1, V2 und V5 (jeweils 45 Gew.-%). Weiterhin wurde der jeweiligen Emaille-Zusammensetzung ein organisches Anpastmedium zugegeben und eine Viskosität von 3000 - 5000 mPa*s eingestellt. Anschließend erfolgte eine Dispergierung in einem DISPERMAT® der Firma VMA-GETZMANN GmbH und einem Dreiwalzenstuhl. Die resultierenden Pasten wurden durch Siebdruck mit einer Maschenweite von 100 T auf transparente, farblose, keramisierbare LAS-Glasscheiben des Typs ROBAX® gedruckt. Diese Scheiben hatten eine Dicke von 4 mm und eine Größe von 400 ^{∗} 450 mm². Das Druckmuster umfasste sowohl zusammenhängende Flächen als auch Linien- und Punktmuster. Diese wurden im Anschluss während der Keramisierung des LAS-Glases, mit einer Temperatur von 920°C für 20 min eingebrannt. Es wurden auf diese Weise flache Scheiben und auch schwerkraftgesenkte rundverformte Formen mit einem Radius von 470 mm, als auch winklig gebogene mit einem Winkel vom 90° hergestellt. Die Schichtdicke der Emaille lag für alle Beispiele und Vergleichsbeispiele zwischen 3 und 5 µm.

Die so hergestellten emaillierten Glaskeramikscheiben der Beispiele 1 bis 5 zeigen im emaillierten Bereich eine sehr gute Beständigkeit gegen Infiltration durch Flüssigkeiten, eine hohe Kleberbeständigkeit, Stoßfestigkeit und einen hohen Wert in der Opazität von mindestens 2,0. Weiterhin zeichnen sie sich mit einem L*-Wert von weniger als 26,2, einen a*-Wert von weniger als 1 und einem b*-Wert von maximal 0,3 durch einen tief schwarzen Farbeindruck aus.

Der thermische Ausdehnungskoeffizient CTE liegt für die Glasfritten der erfindungsgemäßen Beispiele unter 4,3^{∗}10⁻⁶ /K.

Die besonders vorteilhaften Beispiele 2 und 3 weisen einen sehr niedrigen CTE von weniger als 3,8^{∗}10⁻⁶ /K und eine besonders hohe Opazität von mehr als 3 auf.

Bis auf die Vergleichsbeispiele V2 und V5 zeigen die Vergleichsbeispiele eine nicht ausreichende Beständigkeit gegen Infiltration durch Flüssigkeiten, wie aus der Bewertung der Sichtbarkeit von Reinigungsmitteln hervorgeht. Dies lässt auf eine hohe Porosität der jeweiligen Emaille schließen. Daneben zeigen die Vergleichsbeispiele V1, V2 und V5 einen unzureichend niedrigen Wert in der Opazität von weniger als 1,2 und sind somit nicht blickdicht. Die Vergleichsbeispiele V3 und V4 weisen zwar eine deutlich höhere Opazität auf, sind allerdings dennoch ebenfalls nicht blickdicht, wie aus der negativen Bewertung der Klebersichtbarkeit ("x") deutlich wird.

Im Folgenden werden weitere Messverfahren der in Tabelle 1 und 2 aufgeführten Parameter näher erläutert.

Die Opazität O entspricht dem Kehrwert der visuellen Transmission in Prozent Tᵥᵢₛ(%): O = 1/Tᵥᵢₛ(%). Eine Opazität von O = 1,5 entspricht somit einer visuellen Transmission von ca. Tᵥᵢₛ = 0,67 %.

Die visuelle Transmission entspricht dabei dem mit der spektralen Hellempfindlichkeit des menschlichen Auges gefalteten und spektral integrierten Anteil des durch eine Probe transmittierten Lichts im Wellenlängenbereich von 380 bis 780 nm. Für die Messung der visuellen Transmission wird eine Probe mit einem CIE-Normlicht der Normlichtart D65 beleuchtet. Der transmittierte Anteil des eingestrahlten Lichts wird mit einem Sensor detektiert, dessen spektrale Empfindlichkeit der CIE-Normspektralwertfunktion y entspricht. Um auch das von der Probe gestreute Licht detektieren zu können, ist der Sensor in einer Ulbricht-Kugel angeordnet, an deren Eintrittsöffnung die Probe für die Messung positioniert wird. Das detektierte Signal wird dabei über den Wellenlängenbereich von 380 nm bis 780 nm integriert und auf das Signal einer Messung ohne Probe im Strahlengang normiert.

Die Messung der visuellen Transmission, aus der die Opazität berechnet wurde, wurde mit einem Haze-Gard Plus der Firma BYK-Gardner durchgeführt.

In den Tabellen 1 und 2 sind die Tests für die Sichtbarkeit von Reinigungsmitteln und für Kleber mit einem "o" markiert, falls der entsprechende Test bestanden wurde und mit einem "x", falls der entsprechende Test nicht bestanden wurde.

Die Untersuchung zur Sichtbarkeit von Reinigungsmitteln wird durch Aufbringen eines Tropfens von 0,6 ml eines haushaltsüblichen Reinigungsmittels, z.B. Sidolin Zitrus Glasreiniger, auf die emaillierte Oberfläche und anschließende visuelle Begutachtung von der entgegengesetzten Seite durchgeführt. Ist die Flüssigkeit dort zu erkennen, wird der Test als nicht bestanden gewertet.

Die Bewertung der Klebersichtbarkeit wird durch Aufbringen eines schwarz eingefärbten Silikonklebers, der ein Gemisch aus Polydimethylsiloxanen, Siliziumdioxid und Vernetzern enthält, auf die emaillierte Oberfläche und anschließende visuelle Begutachtung von der entgegengesetzten Seite durchgeführt. Ist die beklebte Fläche dort visuell zu erkennen, wird der Test als nicht bestanden gewertet. Die Sichtprüfung wird in Einbaulage bei schwarzem Hintergrund und einer Beleuchtung von > 800 Lux/m² durchgeführt.

Die Beispiele V1 bis V4 zeigen eine zu hohe Porosität, die sich auch in den sehr niedrigen Glanzwerten widerspiegelt. Das Beispiel V5 hatte hohe Glanzwerte, was auf die niedrige Pigmentierung und die Verwendung einer Glasfritte nach dem erfindungsgemäßen Beispiel 3 zurückzuführen ist. Die Glanzmessungen wurden mit einem Glanzmessgerät der Firma Rhopoint Instruments IQ durchgeführt. Die emaillierten Glaskeramikartikel wurden dazu im emaillierten Bereich auf der Seite der Emaille unter einem Winkel von 60° vermessen.

Der CIE-L*a*b* Farbort der emaillierten Glaskeramiken wurde mit dem Messgerät Datacolor CHECK Plus der Firma Datacolor AG mit Normlicht D65 und Betrachtungswinkel 10° bestimmt. Dazu wurde das Messgerät auf die gegenüberliegende Seite des emaillierten Bereiches auf die Glaskeramik gesetzt, wobei der Messfleck des Messgerätes vollständig über der Emaille positioniert war. Der gemessene Farbort entspricht somit also dem in Reflexion wahrgenommenen Farbort der Emaille mit Durchtritt des Lichts durch die Glaskeramik.

## Patentansprüche

1. Emaille-Zusammensetzung zum Emaillieren von Glaskeramikartikeln enthaltend wenigstens eine Glasfritte und wenigstens ein Pigment, wobei die Emaille-Zusammensetzung einen Pigmentanteil von >50 bis 60 Gew.-% aufweist,
wobei die Glasfritte eine Partikelgrößenverteilung mit einer mittleren Partikelgröße D₅₀ von 0,5 µm bis 3 µm aufweist und
wobei die Glasfritte mindestens folgende Bestandteile in Gew.-% auf Oxidbasis enthält:
| | |
|---|---|
| SiO₂ | 65 - 72, |
| Al₂O₃ | 0,1 - 10, |
| B₂O₃ | 20 - 25, |
| Li₂O | 0 - <2, |
| Na₂O | 1 - 7, |
| K₂O | 0 - 3, |
Li₂O + Na₂O + K₂O 1 - 9 und
bis auf unvermeidliche Spuren frei von TiO₂ und ZrO₂ ist.

2. Emaille-Zusammensetzung nach Anspruch 1,
wobei die Glasfritte einen thermischen Ausdehnungskoeffizienten von 2,0^{∗}10⁻⁶/K bis 4,5^{∗}10⁻⁶ /K im Temperaturbereich von 20 °C bis 300 °C aufweist.

3. Emaille-Zusammensetzung nach einem der vorstehenden Ansprüche,
wobei die Glasfritte eine Differenz zwischen Verarbeitungstemperatur V_{A} und Transformationstemperatur T_{g} von mindestens 500 K aufweist.

4. Emaille-Zusammensetzung nach dem vorstehenden Anspruch 3,
wobei die Glasfritte eine Transformationstemperatur T_{g} von 400 °C bis 550 °C, bevorzugt von 400 °C bis 500 °C, eine Erweichungstemperatur E_{W} von 650 °C bis 850 °C, bevorzugt von 700 °C bis 800 °C sowie eine Verarbeitungstemperatur V_{A} von 900 °C bis 1200 °C, bevorzugt von 950 °C bis 1150 °C aufweist.

5. Emaille-Zusammensetzung nach einem der vorstehenden Ansprüche,
wobei die Glasfritte eine Partikelgrößenverteilung mit einer mittleren Partikelgröße D₅₀ von 1 bis 2 µm aufweist.

6. Emaille-Zusammensetzung nach einem der vorstehenden Ansprüche,
wobei die Emaille-Zusammensetzung einen Pigmentanteil von 52 bis 57 Gew.-% aufweist.

7. Emaille-Zusammensetzung nach einem der vorstehenden Ansprüche,
wobei das Pigment eine Partikelgrößenverteilung mit D₅₀ von 0,1 µm bis 2 µm, bevorzugt >0,8 µm bis 1,5 µm, besonders bevorzugt mit einem D₅₀ kleiner als dem der Glasfritte aufweist.

8. Emaille-Zusammensetzung nach einem der vorstehenden Ansprüche,
wobei das wenigstens eine Pigment aus Metalloxiden, bevorzugt aus Spinellen, besonders bevorzugt aus schwarz färbenden Co-Cr-Fe-Mn-Spinellen besteht.

9. Glaskeramikartikel, der einen Grundkörper aus Glaskeramik sowie eine blickdichte Emaille aufweist, wobei die Emaille mittels einer Emaille-Zusammensetzung nach einem der vorstehenden Ansprüche aufgebracht wurde.

10. Glaskeramikartikel nach Anspruch 9,
**dadurch gekennzeichnet, dass** die Emaille eine Opazität von mindestens 1,5, bevorzugt mindestens 2 aufweist.

11. Glaskeramikartikel nach Anspruch 10,
**dadurch gekennzeichnet, dass** die Emaille einen L*-Wert von weniger als 30, bevorzugt von weniger als 28 sowie einen a*-Wert und einen b*-Wert mit einem Betrag von jeweils weniger als 2, bevorzugt weniger als 1 im CIE-L*a*b*-Farbraum aufweist.

12. Glaskeramikartikel nach Anspruch 9 oder 10,
**dadurch gekennzeichnet, dass** die Emaille eine Dicke von 1 µm bis 10 µm, bevorzugt von 2 µm bis 7 µm aufweist.

13. Glaskeramikartikel nach Anspruch 12,
**dadurch gekennzeichnet, dass** er zumindest abschnittsweise rundverformt oder zumindest einfach winklig gebogen ist.

14. Verwendung eines Glaskeramikartikels nach einem der Ansprüche 9 bis 13 als Sicht- oder Vorsatzscheibe von Kaminen und Öfen, Abdeckung von Lampen, Wärmestrahlern oder induktiven Batterieladevorrichtungen, als Teil der Rückseite eines Gehäuses für Mobiltelefone oder Tablets oder in Haushaltsgeräten wie beispielsweise Backöfen, Wasserkochern, vorzugsweise gasbefeuerten Grills oder Toastern.

15. Verfahren zum Herstellen eines emaillierten Glaskeramikartikels, das zumindest die folgenden Schritte umfasst:
• Bereitstellen eines Grundkörpers aus keramisierbarem Glas- oder Glaskeramik,
• Bereitstellen einer Glasfritte mit einer Partikelgrößenverteilung mit einer mittleren Partikelgröße D₅₀ von 0,5 µm bis 3 µm, die mindestens folgende Bestandteile in Gew.-% auf Oxidbasis enthält:
| | |
|---|---|
| SiO₂ | 65 - 72, |
| Al₂O₃ | 0,1 - 10, |
| B₂O₃ | 20 - 25, |
| | |
|---|---|
| Li₂O | 0 - <2, |
| Na₂O | 1 - 7, |
| K₂O | 0-3, |
Li₂O + Na₂O + K₂O 1-9 und
bis auf unvermeidliche Spuren frei von TiO₂ und ZrO₂ ist,
• Herstellen einer Emaille-Zusammensetzung durch Mischen der bereitgestellten Glasfritte mit einem Pigment, wobei die Emaille-Zusammensetzung einen Pigmentanteil von >50 bis 60 Gew.-%, bevorzugt 52 bis 57 Gew.-% aufweist,
• Aufbringen der Emaille-Zusammensetzung auf den bereitgestellten Grundkörper und
• Einbrennen der auf den Grundkörper aufgebrachten Emaille-Zusammensetzung bei einer Temperatur von 800°C bis 1100°C, bevorzugt 900 °C bis 1000 °C für 2 Minuten bis 120 Minuten, bevorzugt 10 Minuten bis 90 Minuten.

## Claims

1. Enamel composition for enamelling glass-ceramic articles, containing at least one glass frit and at least one pigment, wherein the enamel composition has a proportion of pigment of from >50 to 60% by weight,
wherein the glass frit has a particle size distribution having an average particle size D₅₀ of from 0.5 µm to 3 µm and
wherein the glass frit contains at least the following constituents in % by weight on an oxide basis:
| | |
|---|---|
| SiO₂ | 65-72, |
| Al₂O₃ | 0.1-10, |
| B₂O₃ | 20-25, |
| Li₂O | 0-<2, |
| Na₂O | 1-7, |
| K₂O | 0-3, |
Li₂O + Na₂O + K₂O 1-9 and
is free, except for unavoidable traces, of TiO₂ and ZrO₂.

2. Enamel composition according to Claim 1, wherein the glass frit has a coefficient of thermal expansion of from 2.0^{∗}10⁻⁶/K to 4.5^{∗}10⁻⁶/K in the temperature range from 20°C to 300°C.

3. Enamel composition according to either of the preceding claims, wherein the glass frit has a difference between processing temperature V_{A} and transition temperature T_{g} of at least 500 K.

4. Enamel composition according to Claim 3, wherein the glass frit has a transition temperature T_{g} of from 400°C to 550°C, preferably from 400°C to 500°C, a softening temperature E_{w} of from 650°C to 850°C, preferably from 700°C to 800°C, and a processing temperature V_{A} of from 900°C to 1200°C, preferably from 950°C to 1150°C.

5. Enamel composition according to any of the preceding claims, wherein the glass frit has a particle size distribution having an average particle size D₅₀ of from 1 to 2 µm.

6. Enamel composition according to any of the preceding claims, wherein the enamel composition has a proportion of pigment of from 52 to 57% by weight.

7. Enamel composition according to any of the preceding claims, wherein the pigment has a particle size distribution having a D₅₀ of from 0.1 µm to 2 µm, preferably from >0.8 µm to 1.5 µm, particularly preferably a D₅₀ smaller than that of the glass frit.

8. Enamel composition according to any of the preceding claims, wherein the at least one pigment consists of metal oxides, preferably of spinels, particularly preferably of black-colouring Co-Cr-Fe-Mn spinels.

9. Glass-ceramic article comprising a main element composed of glass-ceramic and an opaque enamel, wherein the enamel has been applied by means of an enamel composition according to any of the preceding claims.

10. Glass-ceramic article according to Claim 9, **characterized in that** the enamel has an opacity of at least 1.5, preferably at least 2.

11. Glass-ceramic article according to Claim 10, **characterized in that** the enamel has an L* value of less than 30, preferably less than 28, and an a* value and a b* value each having an absolute value of less than 2, preferably less than 1, in the CIE L*a*b* colour space.

12. Glass-ceramic article according to Claim 9 or 10, **characterized in that** the enamel has a thickness of from 1 µm to 10 µm, preferably from 2 µm to 7 µm.

13. Glass-ceramic article according to Claim 12, **characterized in that** it has been deformed with rounding at least in sections or has been bent in an angular manner at least once.

14. Use of a glass-ceramic article according to any of Claims 9 to 13 as sight window or front window of chimneys and ovens, covering of lamps, heat radiators or inductive battery charging devices, as part of the rear side of a housing for mobile telephones or tablets or in household appliances such as baking ovens, water cookers, preferably gas-fired grills or toasters.

15. Process for producing an enamelled glass-ceramic article, which comprises at least the following steps:
• provision of a main element composed of ceramisizable glass or glass-ceramic,
• provision of a glass frit having a particle size distribution having an average particle size D₅₀ of from 0.5 µm to 3 µm, which contains at least the following constituents in % by weight on an oxide basis:
| | |
|---|---|
| SiO₂ | 65-72, |
| Al₂O₃ | 0.1-10, |
| B₂O₃ | 20-25, |
| Li₂O | 0-<2, |
| Na₂O | 1-7, |
| K₂O | 0-3, |
Li₂O + Na₂O + K₂O 1-9 and
is free, except for unavoidable traces, of TiO₂ and ZrO₂,
• production of an enamel composition by mixing the glass frit provided with a pigment, wherein the enamel composition has a proportion of pigment of from >50 to 60% by weight, preferably from 52 to 57% by weight,
• application of the enamel composition to the main element provided and
• baking of the enamel composition applied to the main element at a temperature of from 800°C to 1100°C, preferably from 900°C to 1000°C, for from 2 minutes to 120 minutes, preferably from 10 minutes to 90 minutes.

## Revendications

1. Composition d'émail pour l'émaillage d'articles de vitrocéramique contenant au moins une fritte de verre et au moins un pigment, la composition d'émail présentant une proportion en pigment de > 50 à 60 % en poids,
la fritte de verre présentant une granulométrie comportant une grosseur moyenne de particule D₅₀ de 0,5 µm à 3 µm et
la fritte de verre contenant au moins les ingrédients suivants en % en poids sur une base d'oxyde :
| | |
|---|---|
| SiO₂ | 65 à 72, |
| Al₂O₃ | 0,1 à 10, |
| B₂O₃ | 20 à 25, |
| Li₂O | 0 à < 2, |
| Na₂O | 1 à 7, |
| K₂O | 0 à 3, |
Li₂O + Na₂O + K₂O 1 à 9 et,
sauf traces inévitables, étant exempte de TiO₂ et de ZrO₂.

2. Composition d'émail selon la revendication 1, la fritte de verre présentant un coefficient d'allongement thermique de 2,0^{∗}10⁻⁶/K à 4,5^{∗}10⁻⁶/K dans une plage de température de 20 °C à 300 °C.

3. Composition d'émail selon l'une quelconque des revendications précédentes, la fritte de verre présentant une différence entre une température de traitement V_{A} et une température de transformation T_{g} d'au moins 500 K.

4. Composition d'émail selon la revendication précédente 3, la fritte de verre présentant une température de transformation T_{g} de 400 °C à 550 °C, préférablement de 400 °C à 500 °C, une température de ramollissement E_{w} de 650 °C à 850 °C, préférablement de 700 °C à 800 °C ainsi qu'une température de traitement V_{A} de 900 °C à 1 200 °C, préférablement de 950 °C à 1 150 °C.

5. Composition d'émail selon l'une quelconque des revendications précédentes, la fritte de verre présentant une granulométrie comportant une grosseur moyenne de particule D₅₀ de 1 à 2 µm.

6. Composition d'émail selon l'une quelconque des revendications précédentes, la composition d'émail présentant une proportion en pigment de 52 à 57 % en poids.

7. Composition d'émail selon l'une quelconque des revendications précédentes, le pigment présentant une granulométrie comportant une D₅₀ de 0,1 µm à 2 µm, préférablement > 0,8 µm à 1,5 µm, particulièrement préférablement comportant une D₅₀ inférieur à celui de la fritte de verre.

8. Composition d'émail selon l'une quelconque des revendications précédentes, l'au moins un pigment étant constitué d'oxydes métalliques, préférablement de spinelles, particulièrement préférablement de spinelles Co-Cr-Fe-Mn colorant en noir.

9. Article de vitrocéramique, qui présente un corps de base en vitrocéramique ainsi qu'un émail opaque, l'émail ayant été appliqué au moyen d'une composition d'émail selon l'une quelconque des revendications précédentes.

10. Article de vitrocéramique selon la revendication 9, **caractérisé en ce que** l'émail présente une opacité d'au moins 1,5, préférablement d'au moins 2.

11. Article de vitrocéramique selon la revendication 10, **caractérisé en ce que** l'émail présente une valeur de L* inférieure à 30, préférablement inférieure à 28 ainsi qu'une valeur de a* et une valeur de b* à chaque fois inférieure à 2, préférablement inférieure à 1 dans l'espace de couleur CIE-L*a*b*.

12. Article de vitrocéramique selon la revendication 9 ou 10, **caractérisé en ce que** l'émail présente une épaisseur de 1 µm à 10 µm, préférablement de 2 µm à 7 µm.

13. Article de vitrocéramique selon la revendication 12, **caractérisé en ce qu'**il est au moins partiellement déformé de manière circulaire ou au moins simplement coudé.

14. Utilisation d'un article de vitrocéramique selon l'une quelconque des revendications 9 à 13 en tant qu'hublot ou vitre supplémentaire de cheminées et de fours, d'une couverture de lampes, de radiateurs ou de dispositifs inductifs de charge de batteries, comme partie du dos d'un boîtier pour des téléphones mobiles ou d'une tablette ou dans des appareils ménagers comme par exemple des fours, des bouilloires, de préférence des grills ou des grillepain à gaz.

15. Procédé pour la préparation d'un article de vitrocéramique émaillé, qui comprend au moins les étapes suivantes :
• mise à disposition d'un corps de base composé de verre céramisable ou de vitrocéramique,
• mise à disposition d'une fritte de verre dotée d'une granulométrie comportant une grosseur moyenne de particule D₅₀ de 0,5 µm à 3 µm, qui contient au moins les ingrédients suivants en % en poids sur une base d'oxyde :
| | |
|---|---|
| SiO₂ | 65 à 72, |
| Al₂O₃ | 0,1 à 10, |
| B₂O₃ | 20 à 25, |
| Li₂O | 0 à < 2, |
| Na₂O | 1 à 7, |
| K₂O | 0 à 3, |
Li₂O + Na₂O + K₂O 1 à 9 et,
sauf traces inévitables, étant exempte de TiO₂ et de ZrO₂,
• préparation d'une composition d'émail par mélange de la fritte de verre mise à disposition avec un pigment, la composition d'émail présentant une proportion en pigment de > 50 à 60 % en poids, préférablement de 52 à 57 % en poids,
• application de la composition d'émail sur le corps de base mis à disposition et
• cuisson de la composition d'émail appliquée sur le corps de base à une température de 800 °C à 1 100 °C, préférablement de 900 °C à 1 000 °C pendant 2 minutes à 120 minutes, préférablement 10 minutes à 90 minutes.
